# EUROPEAN PATENT APPLICATION

(11) **EP 2 106 039 A1**
(43) Date of publication of application: **30.09.2009**
(21) Application number: 08200011.8
(22) Date of filing: 26.03.2008
(51) Int. Cl.: H04B 7/185, G01C 23/00

(54) **Processing operational data**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Operational data (214), such as data that is used to generate aircraft Head Down Displays, is recorded using a first type of processor (120) located onboard a vehicle. The system converts the operational data so that it is useable remotely on a second type of processor (404). The conversion includes analysing (504) the recorded operational data to identify its format, selecting (504) appropriate conversion type data (225), and using the selected conversion type data to produce converted operational data (227) that is usable on the second type of processor.

## Description

The present invention relates to processing operational data recorded using a processor onboard a vehicle.

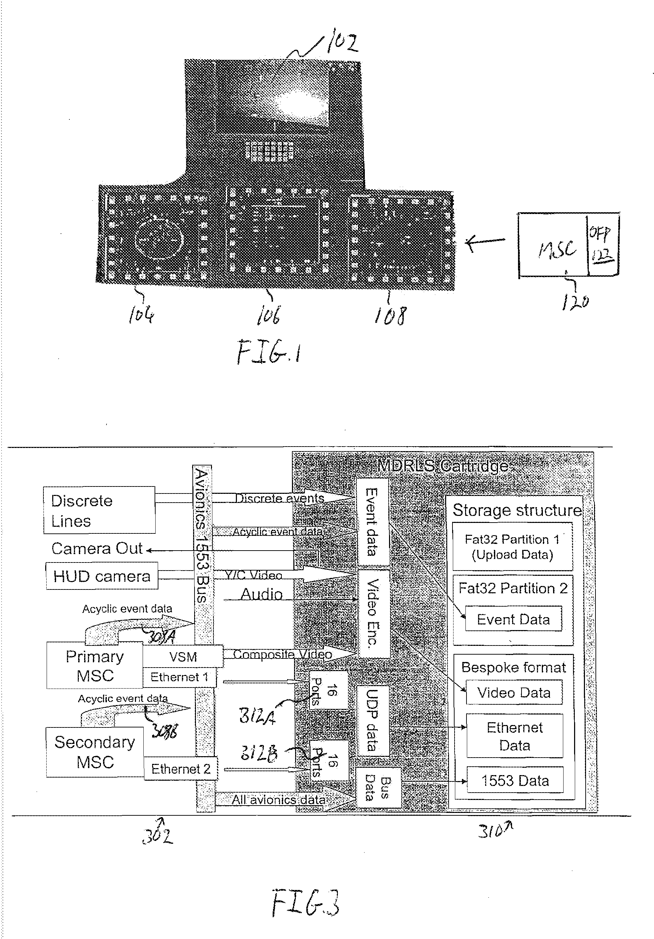

Vehicles such as military aircraft are often configured to record and/or display operational data during use. Examples of operational data include radar information, airspeed, altitude, pitch, roll, temperature, geographical location, etc, as well as mission-specific data, e.g. distance to target, etc. Such operational data can be displayed on head up (HUD) and head down displays (HDDs) in the cockpit of an aircraft during flight. Figure 1 shows example HUD and HDDs. In the example there is one HUD 102 that can overlay information such as airspeed, altitude, etc, readings, onto the pilot's view out of the aircraft window. There are also three HDDs 104, 106, 108, which can display various types of information, such as radar images, weapon-related information, etc, on separate displays surfaces. It will be understood that the arrangement of HUD and HDDs in the Figure are exemplary only and the number/location of displays, the type of information processed/shown, the display technology used, etc, can vary.

It is often desirable to replay the cockpit displays of military aircraft during post-mission debrief and analysis. There is no known convenient way of doing this because recorders capable of recording the content of displays from a number of different sources as video images are not available and it would be difficult to guarantee that the video captured will be of sufficiently high quality to enable the contents of the displays to be read clearly upon replay.

Referring still to Figure 1, a mission control computer (MSC) 120 is located onboard the aircraft and is in communication with various other components. The computer 120 executes an operation flight program (OFP) 122 that performs various functions, including generating various cockpit displays in response to information received, directly or indirectly, from various sources, e.g. onboard sensors. Due to the type of processor used on certain types of aircraft for this purpose, the display-generation data can be unsuitable for being stored and then directly used for replay remotely from the aircraft, e.g. data created using a Motorola PowerPC 7400 processor may not be immediately useable on a typical general-purpose PC based on Intel x86 CPU architecture. The OFP is regularly updated during development, meaning that the type/content of the format dealt with by the OFP, including the format of the various cockpit displays, are changed frequently. These frequent changes pose additional problems for anyone attempting to replay the cockpit displays on a remote device because the remote device would also need to be re-configured in a suitable manner each time the display data format, etc, is updated.

Embodiments of the present invention are intended to address at least some of the problems discussed above.

According to one aspect of the present invention there is provided a method of preparing operational data recorded using a first type of processor located onboard a vehicle so that the operational data is useable remotely on a second type of processor, the method including:
analysing the recorded operational data to identify its format;
selecting conversion type data based on the format identified, and
converting at least part of the recorded operational data using the selected conversion type data, the converted data being usable on the second type of processor.

The operational data may include data that is used to generate at least one display that is shown onboard the vehicle during use, e.g. aircraft cockpit Heads Down Displays, and is to be reproduced on a remote display device using the second type of processor. It will also be understood that the operational data may be recorded by another type of vehicle, which may or may not be manned (e.g. an autonomous land or underwater vehicle) and so the operational data may not be necessarily displayed in the vehicle during the recording.

The format of the recorded operational data may relate to a version of code (e.g. OFP software) used by a recording device (which may be located on the vehicle) to record the operational data. The operational data may be recorded onto a removable storage medium, e.g. a cartridge. The recording device will usually be located on the vehicle, but in some cases the first processor may transfer the data to a remote device where it is recorded.

The recorded operational data may include a plurality of separate data blocks/files, and the data blocks/files may relate to a plurality of inputs received by a recording device (which may be located on the vehicle), e.g. inputs received at separate Ethernet ports of the recording device. Each of the separate data blocks/files may be in one of a plurality of data formats. The recording device may be configured to record data over a series of time frames (at a particular data capture frequency). The data captured during each said time frame may be used to generate a said data block/file. Thus, each said data block/file may be associated with a time frame identifier. The data format of a particular said data block/file may depend on the data capture frequency of the recording device at the time frame when the recorded data block/file was created. The method may include analysing a said data block/file to identify its data format (e.g. by checking the time frame identifier of the data block/file) and selecting a suitable format conversion code for the identified data block/file format. The format conversion code may specify location, size, Endian type, etc, of the data block/file.

At least part of the conversion type data may be automatically generated using debugger information produced as a result of analysis/compilation of code that is executed onboard the vehicle for the recording of the operational data.

The recorded operational data may include data describing operational characteristics displayed on at least one display surface located onboard the vehicle and the converted operational data may be used for reproducing the display of the operational characteristics on a remote display surface. The display surface may be arranged to display a plurality of different operational characteristics. The data describing operational characteristics may relate to an output of a device, e.g. an altitude sensor, located in/on the vehicle.

The method may further include replaying at least some of the converted data on a screen display generated by the second type of processor. At least part of code (prior to compilation) used to perform the replay is identical to code used onboard the vehicle to generate a screen display (during the recording of the operational data). A data block/file (or sequence of data blocks/files) for replay may be selected by the time frame identifiers associated with the data blocks/files. Each said data block/frame may include a feature status indicator (e.g. an indication of whether or not a "Moving Map" feature was active when that data block/file was recorded) and the replay may include the generating the display in accordance with the feature status indicator. The recorded operational data may include operational data that was not displayed on a display device in the vehicle during the recording and this non-displayed data may be selectively displayed on the remote display device during the replay.

The method may further include obtaining image/video sequence data recorded simultaneously with the operational data and the replaying may include replaying the image/video sequence data along with the operational data on a remote display device.

According to another aspect of the present invention there is provided a computer program product comprising computer readable medium, having thereon computer program code means, when the program code is loaded, to make the computer execute a method of preparing operational data recorded using a first type of processor located onboard a vehicle so that the operational data is useable remotely on a second type of processor substantially as described herein.

According to another aspect of the present invention there is provided apparatus adapted to prepare operational data recorded using a first type of processor located onboard a vehicle so that the operational data is useable remotely on a second type of processor, the apparatus including:
a device configured to analyse the recorded operational data to identify its format;
a device configured to select conversion type data based on the format identified, and
a device configured to convert at least part of the recorded operational data using the selected conversion type data, the converted data being usable on the second type of processor.

According to yet another aspect of the present invention there is provided a method of remotely replaying operational data recorded onboard a vehicle, the method including:
obtaining recorded operational data; and
converting at least part of the recorded operational data so that it is usable on a replay device remote from the vehicle.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 illustrates example head up and head down displays;
Figure 2 is a schematic overview of steps involving recording, converting and remotely replaying operational data, and building applications for performing these operations;
Figure 3 illustrates schematically the recording operation;
Figure 4 is system architecture diagram of a ground station computer;
Figure 5 illustrates schematically steps involved in converting the recorded operational data for replay on the ground station computer, and
Figure 6 illustrates schematically steps involved in replaying the converted operational data on the ground station computer.

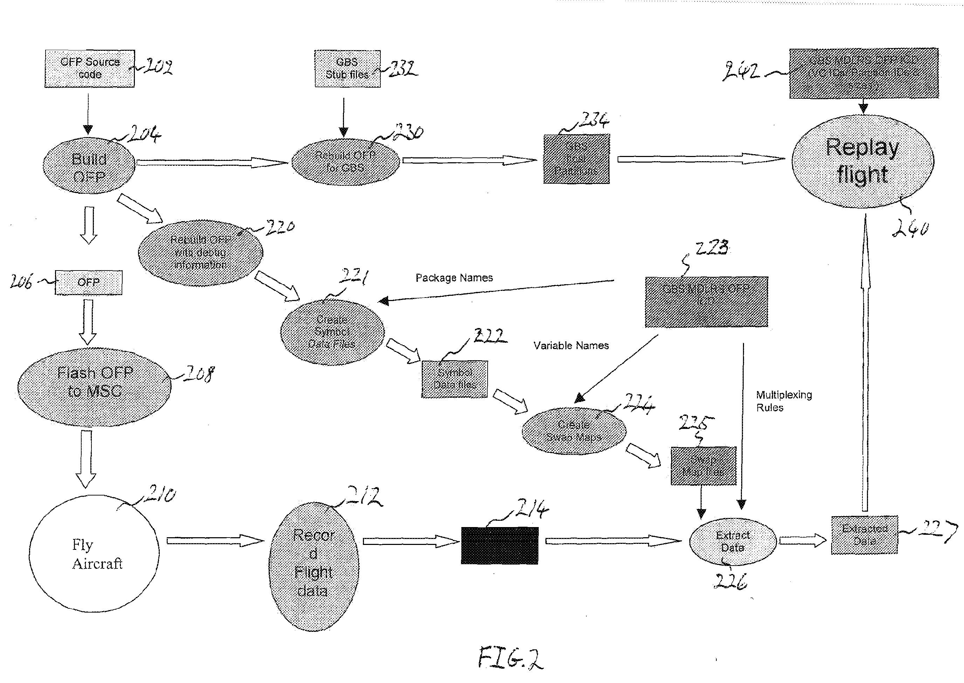

Referring to Figure 2, there is shown schematically processes for recording cockpit display data on an aircraft and replaying the data remotely on a ground station computer. The source code 202 for the OFP is complied/built at step 204, resulting in executable OFP code 206. The executable code 206 is transferred at step 208 to the MSC onboard the aircraft and runs during flight (step 210) to record (step 212) flight data. In some aircraft (e.g. the Hawk family, manufactured by BAE Systems), data describing the content of cockpit displays can be captured by a recorder device (called the Mission Data Loading and Recording System (MDLRS)) that includes a removable storage medium (e.g. a cartridge). The device can load mission data (e.g. waypoints and routes) for use during the flight and can record a number of different sets of data for post-flight use. The recorded data can include HUD video (e.g. recorded in MPEG format), together with data necessary to regenerate the cockpit HDDs, including HDD drive data and HDD state data.

The HDD drive data is used by the MSC OFP to control the display of formats of the multi-function displays. This can comprise several (e.g. 5) separate sets of data for each cockpit, such as mission data (recorded over a number of time frames) and head-down manager data for each of the HDD and Moving Map (a display feature that shows the position of the aircraft in real time on the top of a map image). Figure 3 illustrates schematically the recording operation from the onboard sources 302 to the MDLRS 310 and an outline of the operation will now be given. Data is recorded to the MDLRS via Ethernet (User Datagram Protocol) with front/rear cockpit data being recorded to two distinct physical ports 312A, 312B. The five different data sets of each cockpit are recorded to distinct virtual ports of the MDLRS. Data arriving at different ports on the MDLRS can be stored in separate files.

The HDD state data affects the appearance of certain features of the display. Four sets of this type of data can be recorded for each cockpit, covering state data for three HDDs and Moving Map. These are each recorded to distinct physical and/or virtual ports of the MDLRS. In addition, Global Positioning System (GPS) time is provided cyclically to the MDLRS via a data bus. This time data can be used by the MDLRS when generating time stamps for recordings. Also provided via the databus are a series of acyclic events 308A, 308B that record the occurrence of a variety of different cockpit selections, etc. The GPS time at which the event took place is included together with a number of parameters describing the aircraft state at the time of the event. These acyclic events, along with the time information indicating when the event took place are recorded to an area of the MDLRS cartridge separate to that used for storage of the User Datagram Protocol data. The recorded flight data (214 in Figure 2) is saved on the MDLRS cartridge and can be accessed remotely by a device connected to a suitable cartridge reader.

In the specific example, the recorded data can be in the form of a plurality of separate data blocks/files that were received at a plurality of Ethernet ports of the MDLRS (e.g. with each port corresponding to data used to generate a single HDD) over a series of time frames. The data format of a particular said data block/file may depend on the data capture frequency of the recording device at the time frame when the recorded data block/file was created. The data within a given file may be of a complex format as the OFP will record data blocks to the file at, for example, a rate of 50Hz. This means that the contents and format of each data block can differ across cycles. Thus, the content of any data block (obtained from a given Ethernet port) will be recorded by the OFP over a number of 50Hz or 25Hz frames, depending on the port. At each time frame, a data packet will be recorded in a structured format (e.g. as an Ada record structure) and saved on the MDLRS cartridge. An example data/record structure is given below:

```
       Record {Record_Type_1}
             Data Item 1 : 32 bit real at address 0
             Data Item 2 : 16 bit integer at address 31
 End
```

The data type of the data blocks can differ, depending on whether the block was recorded at a frame rate of 50 Hz or 25 Hz. The example below shows recorded data blocks having four different data types:
Frame 1 : Record_Type_1
Frame 2 : Record_Type_2
Frame 3 : Record_Type_3
Frame 4 : Record_Type_4
Frame 5 : Record_Type_1
Frame 6 : Record_Type_2
Frame 7 : Record_Type_3
Frame 8 : Record_Type_4
   ...

At each frame, the data block recorded is preceded by a frame indicator (e.g. Frames 1 - 4 in the above example), which denotes the cycle number and, indirectly, the data type of that data block. The frame indicator is needed by the OFP to decipher the type of information passed from one module of code to another.

As mentioned above, if the data structure definition of the flight data was hard-coded in the ground station computer then this would result in a considerable maintenance problem because the MSC OFP changes frequently during development with respect to the exact contents and format of the recorded drive data to the HDDs. A solution to this problem discovered by the inventors for the present filing is to store data associated with a particular OFP version and then use this data in a conversion application that transforms the recorded flight data into a format that is useable by the ground station computer. The conversion application analyses the recorded data to detect which OFP version generated it and then selects an appropriate set of conversion data. Further, the present inventors have at least partially automated the creation of the conversion data. The MSC OFP can record its own version number to a particular Ethernet port of the MDLRS. The conversion application (described below) accesses a corresponding data file within the recorded data in order to determine the OFP version and then uses this to locate the conversion data appropriate to that OFP.

The data format for the current OFP may be obtained directly using debugger information that can be automatically produced during OFP compilation with an option for generating the debugger information switched on (step 220 of Figure 2). The compiler/debugger is able to determine the data types/formats used within the data processed by the OFP because it needs to know this information in order to provide the debugging functionality. This data format information can define the pattern of recorded data in terms of location and size, etc. An Interface Control Document (ICD) is created for each OFP by the developers, e.g. via manual input to a bespoke ICD generator tool, or this process may be at least partially automated. This generates data in a format that can be interpreted by the conversion application to be executed at the ground station. The OFP ICD defines the type names (a code record) against the cycle number of each of the recorded channels/Ethernet ports so that a replay application executing on the ground station computer can select the correct swap map file for each data set, as will be described below.

At step 221 symbol and data files 222 are created by the compiler/debugger for the current OFP being rebuilt. At step 224 swap map files 225 are created using the symbol and data files 222 and variable names derived from the ICD of the current OFP being built. The swap map files are named according to the names of the data types present in the recorded data and describe the data elements within the data type in terms of size, type and address location relative to record start. This information describes the pattern of the data types only and does not constitute information regarding the OFP that may be proprietary/restricted and so the swap map information can be made available to third parties, if required. The swap maps are data format definitions that set out the location and size of the recorded data. A specific example of a swap map is given below; this defines the type of data to be converted, where the data conversion involves swapping bits of the data:

```
     Analysed file C:\mdlrsg\128e-502\VC
 Info\SwapMaps\rtrc1_mp_router_types--FP_Data_4_Type.swap_map
     #
     # Format of Swap Map File:
     #
     # Type | Param1 | Param2 | Param3 | Param4
     # HEADER | VC_Size | NumberOfByteinstructions |
 NumberOfBitlnstructions |
     # BYTE | From_Addr | To_Addr | |
     # BITFIELD | Byte_Addr | Bitfield Length | NoOfBitfieldPairs | [Bitfield
 Start, Length]
     # ERROR | Error string | | |
     # '#' | Comment#
     HEADER 64 13 12 -- Indicates size of data block, number of byte
 swap instructions, no. of bit swaps
     BITFIELD 16 8 2 [0,1] [1,7] -- bit swap instruction showing byte in which
 bits reside, number of bits across which swap needs to take place, how many
 swaps need to take place, bit pairs which need to swap
     BITFIELD 19 8 2 [0,1] [1,7]
     BITFIELD 22 8 2 [0,1] [1,7]
     BITFIELD 25 8 2 [0,1] [1,7]
     BITFIELD 28 8 2 [0,1] [1,7]
     BITFIELD 31 8 2 [0,4] [4,4]
     BITFIELD 32 8 2 [0,4] [4,4]
     BITFIELD 33 8 2 [0,4] [4,4]
     BYTE 34 35 -- Byte swap instruction showing the no's of the 2 bytes to
 be swapped.
     BYTE 36 39
     BYTE 37 38
     BYTE 40 43
     BYTE 41 42
     BYTE 44 47
     BYTE 45 46
     BYTE 48 51
     BYTE 49 50
     BYTE 52 55
     BYTE 53 54
     BITFIELD 56 8 8 [0,1] [1,1] [2,1] [3,1] [4,1] [5,1] [6,1] [7,1]
     BITFIELD 57 8 8 [0,1] [1,1] [2,1] [3,1] [4,1] [5,1] [6,1] [7,1]
     BITFIELD 58 8 8 [0,1] [1,1] [2,1] [3,1] [4,1] [5,1] [6,1] [7,1]
     BITFIELD 59 8 2 [0,1] [1,7]
     BYTE 60 61
     BYTE 62 63
```

The swap map files 225 are used by a recorded data extraction/conversion step 226 in order to produce extracted data 227 that is usable by the ground station computer, as will be described below.

A version of the OFP is built/complied for a computer located at the ground station at step 230. Portions of the OFP source code 202 that deal with displaying the cockpit information can therefore be re-used on the ground station computer. Not only does this save the significant effort that would be involved in developing OFP source code specifically for use on the ground station computer, it also means that the resulting display on the ground station computer can be substantially identical to that of the MSC onboard the aircraft. Suitable stub files 232 (code that is integrated with the OFP format code to perform actions not available in the OFP, e.g. texture initialisation, state loading) are provided, resulting in the executable OFP code being saved on host partitions 234 of the ground station computer. During installation of the OFP application on the ground station computer, artefacts for a particular version of the OFP are stored in a directory having a corresponding name/identifier. This provides a system that supports OFP plug-ins that allow data from a number of different OFPs to be replayed correctly using the same ground station computer.

A subset of the onboard OFP components are rebuilt specifically for the ground station computer. This involves replacing a small number of files with ground station-specific versions and compiling them for the x86 processor of the computer. The modified files allow for differences between the onboard OFP and ground station environments, including differences in the graphics driver interface. A ground station-specific graphics driver file is built to interpret the OFP's bespoke codes for Open-GL commands and to interface to the ground station computer's graphics driver 406. Other differences dealt with by the modified files include communications differences. The onboard OFP is designed following an Integrated Modular Systems approach and includes a limited operating system that provides communication channels between software applications. The applications that are to be ported to the ground station computer communicate by sending and receiving data to each other using a standard interface. Therefore, for correct operation on the ground station computer, the link to the onboard OFP communications interface needs to be overridden by a link to an 'operating system simulation' running on the ground station computer. Further, in order to allow jump-to, fast forward, etc, of the recorded data to be performed quickly during replay on the ground station computer, state data internal to the HDDs is recorded during flight. This needs to be replayed on the ground station computer in such a way so as to override the local internal state of the formats during execution. The appropriate OFP files need to be overridden to read-in, rather than write-out state to achieve this.

In the specific example, three applications from the onboard OFP are ported to the ground station computer for use in the replay of the HDDs. The first one comprises a Router application. In order to reduce the quantity of data processed, the onboard OFP compresses and cycles data for transfer across processor cards. This data must then be uncompressed and the data for each frame assembled prior to replay on the ground station computer. The ground station computer's version of the OFP includes a Router application for this purpose. Also ported to the ground station computer is a HDD application that draws the format for a single HDD display. Another application that is ported is a Map application that displays the Moving Map format when required.

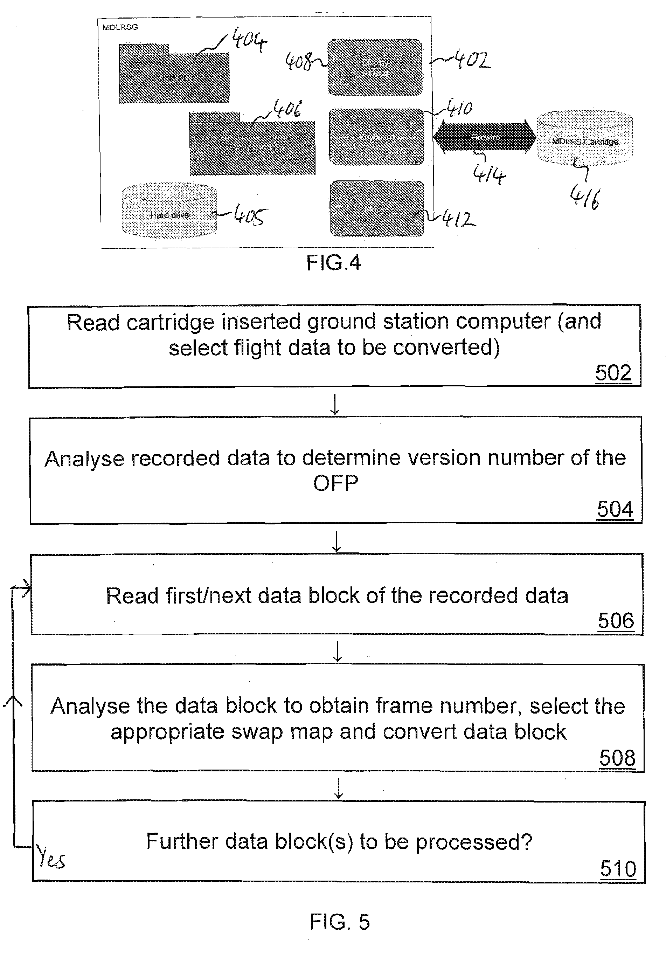

The ground station computer will typically comprise a general purpose computer based on x86 CPU architecture and an example is illustrated schematically in Figure 4. The computer 402 includes a main processor/internal memory 404, local storage, such as a hard drive 405, a graphics card 406, as well as user interface components, such as at least one display surface 408, keyboard 410 and mouse 412. It will be appreciated that the setup in the Figure is exemplary and many variations are possible. The computer can include a communications interface, e.g. Firewire^{™} interface 414, for transferring data to/from the MDLRS cartridge 416 (e.g. via a suitable docking station). The computer is configured to store, and execute on demand, a data conversion application 420 and a flight data replay application 422.

The recorded data extraction/conversion step 226 (and implemented by the conversion application 420 executing on the ground station computer 402) is illustrated in Figure 5. At step 502 the MDLRS cartridge is inserted into a device connected to the ground station computer 402, e.g. a docking station having a Firewire^{™} port. Data extraction from the cartridge need usually only be performed once per flight. However, if more than one set of recorded data is present on the cartridge then the conversion application may allow the user to select which set(s) is/are to be converted.

At step 504 the conversion application analyses the (selected) data set in order to determine the version number of the OFP that recorded it. This information allows the conversion application to select the appropriate set of swap maps, e.g. ones stored in a directory having a name including the corresponding version number.

Step 506 denotes the start of a loop of operations for processing the first/next data block in the set. At step 508 the conversion application analyses the data block to be processed in order to obtain its frame number and uses this to select the appropriate swap map to perform the conversion of that data block. The actual conversion operation(s) may vary from system to system, but can include operations such as reversing the Endianness of the bytes of the data block (e.g. in-line bit/byte swapping to compensate for Endian differences between the mission computer processor and the processor of the ground station computer); reversing the bits of any data item (e.g. arrays) in the block whose bits will be accessed by the replay application; re-assembling/re-ordering bits/bytes within the block, etc.

If the check performed at step 510 indicates that the last data block in the set has been processed then the conversion process can terminate at step 512 after saving the converted data.

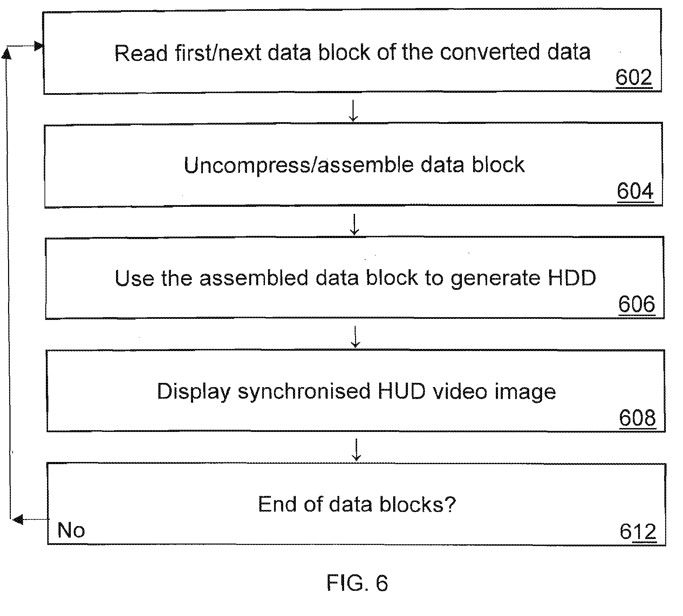

Figure 6 illustrates schematically steps involved in replaying (step 240 of Figure 2) the converted operational data on the ground station computer 402 (and implemented by the replay application 422 executing on the ground station computer). The replay application supports automatic replay of data recorded from any OFP, provided that a suitable plug-in for that OFP version has been created and installed (illustrated schematically by item 242 in Figure 2). In addition to the ICD and swap maps needed by the conversion application 420, each plug-in provides the appropriate OFP executables for the replay application, e.g. the HDD, Router and Map applications.

In simple terms, replay of one HDD on the ground station computer involves executing the re-hosted Router application at a rate equivalent to that used by the onboard OFP (50Hz), followed by execution of the HDD application at the appropriate rate (25Hz). In the schematic illustration of Figure 6, the process starts at step 602, where the first/next converted operational data block to be processed is read. The replay may begin from the beginning of the recorded data, or the replay application may offer jump-to, fast forward, etc, of the displays by simply retrieving the data blocks corresponding to user-selected frames and running those through the Router and HDD applications.

The ground station replay application mimics the communication mechanism of the onboard OFP in order to allow data to be passed into the Router and HDD/Map applications (step 604). The replay application 422 will then retrieve a data block of the appropriate size (as indicated by the correct ICD for the data block being processed) from each of the converted data files for each 50 Hz time frame in order to drive the HDDs (step 606).

In addition, the recorded data can contain an indicator as to whether the Moving Map was switched on a display at a given time (frame). The ICD allows the replay application to locate this indicator and switch on the Moving Map rather than a HDD format if required in order to faithfully replay the cockpit displays as shown during flight. It will be understood that other display features could be activated/de-activated during replay in a similar manner. In practice, the replay application will perform the steps for all of the HDDs to be reproduced.

The recorded data also contains an indication of the format that was on display at any time (frame) for each of the onboard display surfaces. The ground station computer can include a separate/additional display surface that can be used to select any format available from the OFP. This is achieved by overriding the displayed format indication. This allows debrief of any display based on the recorded aircraft data, regardless of whether or not the display was actually shown during flight. It will be appreciated that a user of the ground station computer 402 may stop, pause, override, etc, the execution of the steps during replay (illustrated schematically by arrow 607).

The replay application can also replay HUD video (recorded as MPEG via the MDLRS). The replay application will automatically step through the video in synch with the replay of the HDDs in order to reproduce the full cockpit replay (step 608).

## Claims

1. A method of preparing operational data (214) recorded using a first type of processor (120) located onboard a vehicle so that the operational data is useable remotely on a second type of processor (404), the method including:
analysing (504) the recorded operational data to identify its format;
selecting (504) conversion type data (225) based on the format identified, and
converting (508) at least part of the recorded operational data using the selected conversion type data, the converted data (227) being usable on the second type of processor.

2. A method according to claim 1, wherein the recorded operational data (224) includes data describing operational characteristics displayed on at least one display surface located onboard the vehicle during use, and the converted operational data (227) is used for reproducing (240) the display of the operational characteristics on a remote display surface (408) following the use of the vehicle.

3. A method according to any one of the preceding claims, wherein the recorded operational data (214) includes a plurality of separate data blocks/files, each of the separate data blocks/files being in one of a plurality of data formats, the method including analysing a said data block/file to identify its data format and selecting a suitable format conversion code for the identified data block/file format.

4. A method according to claim 3, wherein the format conversion code specifies features of the data block/file selected from a set: location, size, or Endian type.

5. A method according to any one of the preceding claims, wherein at least part of the conversion type data (225) is automatically generated using debugger information produced as a result of analysis/compilation (204, 220) of code that is executed onboard the vehicle for the recording (212) of the operational data (214).

6. A method according to any one of the preceding claims, wherein at least part of source code (202) used by the second processor (404) to perform the replay is identical to code used by the first processor (120) onboard the vehicle to generate a display during the recording (212) of the operational data (214).

7. A method according to claim 3 or 4, wherein the data block/files are associated with time frame identifiers and replay of a said data block/file (or a sequence of said data block/files) is user-selectable by choosing a time associated with the data blocks/files.

8. A method according to claim 7, wherein the recorded operational data (214) includes operational data that was not displayed on a display device (104, 106, 108) in the vehicle during use, and at least some of the non-displayed data can be selectively displayed on a remote display device (408) during replay (240) of the operational data using the second type of processor (404).

9. A method according to any one of the preceding claims, further including obtaining image/video sequence data recorded simultaneously with the operational data and replaying the image/video sequence data along with the operational data on a remote display device (408).

10. Apparatus adapted to prepare operational data (214) recorded using a first type of processor (120) located onboard a vehicle so that the operational data is useable remotely on a second type of processor (404), the apparatus including:
a device configured to analyse (504) the recorded operational data to identify its format;
a device configured to select (504) conversion type data (225) based on the format identified, and
a device configured to convert (508) at least part of the recorded operational data using the selected conversion type data, the converted data (227) being usable on the second type of processor.
